# EUROPÄISCHE PATENTSCHRIFT

(11) **EP 4 286 797 B1**
(45) Veröffentlichungstag und Bekanntmachung des Hinweises auf die Patenterteilung: **15.10.2025**
(21) Anmeldenummer: 23176853.2
(22) Anmeldetag: 01.06.2023
(51) Int. Cl.: G01D 5/20, G01D 5/244

(54) **SENSOREINRICHTUNG ZUM BERÜHRUNGSLOSEN BESTIMMEN EINER RADIALEN POSITION EINES ROTORS**
SENSOR DEVICE FOR CONTACTLESSLY DETERMINING A RADIAL POSITION OF A ROTOR
DISPOSITIF DE DÉTECTION POUR DÉTERMINER SANS CONTACT UNE POSITION RADIALE D'UN ROTOR

(30) Priorität: 03.06.2022 DE 102022205695
(43) Veröffentlichungstag der Anmeldung: 06.12.2023
(73) Patentinhaber: Adaptive Balancing Power GmbH, 64295 Darmstadt (DE)
(72) Erfinder: Richter, Michael, 64295 Darmstadt (DE); Schaede-Bodenschatz, Hendrik, 64295 Darmstadt (DE)
(74) Vertreter: Hernandez, Yorck

(56) Entgegenhaltungen:
- EP-B1- 3 517 896
- US-A1- 2016 238 412
- US-A1- 2022 252 431

## Beschreibung

Die vorliegende Offenbarung betrifft eine Sensoreinrichtung zum berührungslosen Bestimmen einer radialen Position eines Rotors, welcher zur Drehung um eine Längsachse ausgebildet ist, mit einer Targeteinheit, die an dem Rotor angeordnet ist und ein elektrisch leitendes Targetmaterial aufweist, mit einer Spuleneinheit, welche zumindest eine Spule aufweist und ausgebildet ist für eine elektromagnetische Wechselwirkung mit dem Targetmaterial der Targeteinheit, sowie mit einer Steuereinheit, welche elektrisch mit der Spuleneinheit gekoppelt ist und ausgebildet ist, die Spule der Spuleneinheit mit einem Anregersignal anzuregen und ein Antwortsignal der Spuleneinheit zu erfassen und auszuwerten, um die radiale Position des Rotors zu bestimmen.

In aktiv magnetgelagerten Systemen werden häufig elektromagnetische Sensoreinrichtungen wie Wirbelstromsensoren oder induktive Sensoren zur berührungslosen Bestimmung eines Abstands im Lager eingesetzt. Derartige Sensoreinrichtungen können auch als elektromagnetische Sensoreinrichtung oder induktive Sensoreinrichtung bezeichnet werden. Die Qualität des in der elektromagnetischen Sensoreinrichtung ausgewerteten Mess- oder Antwortsignals ist dabei maßgeblich von der Qualität des Sensortargets, der Targeteinheit, abhängig. Mängel des Sensortargets, beispielsweise durch oberflächliche Schäden an einem Targetelement mit dem Targetmaterial, führen zu einer Verfälschung des gemessenen Abstands und damit zu einer verfälschten Positionsbestimmung der Welle im Lager des magnetgelagerten Systems. Dies ist von besonderer Bedeutung bei großen Differenzgeschwindigkeiten zwischen Sensortarget und dem mit der Spule versehenen Sensorkopf, da die Verfälschungen dynamische Erregungen in einen geschlossenen Regelkreis einbringen, welche negative Auswirkungen für das aktiv magnetgelagerte und damit geregelte System haben. Sie führen zu einer unnötig hohen Stellaktivität des aktiven Magnetlagers des geregelten Systems.

In der Praxis werden verschiedene Verfahren eingesetzt, um Störungen aus dem auszuwertenden Antwortsignal zu entfernen, beispielsweise über Tiefpassfilter und/oder über spezielle Algorithmen wie eine sogenannte Spurkompensation. Diese Verfahren bringen jedoch auch eine Reihe von Nachteilen für das geregelte System mit sich, so dass in einem aktiven Magnetlager deutlich bessere Leistungen erbracht werden, wenn diese Störungen von sich aus minimiert werden können. Eine Alternative zum elektronischen Nachbearbeiten oder Filtern des Antwortsignals ist ein Einsatz flächiger Sensorköpfe, welche eine größere Fläche des Sensortargets abtasten und somit in ihrem Antwortsignal weniger durch Mängel des Sensortargets beeinträchtigt werden.

Die EP 3 517 896 B1 beschreibt einen solchen flächigen Sensorkopf für Außenläufer-Rotoren. Dabei wird auf eine maximale Ausnutzung der zur Verfügung stehenden zylindrischen Targetfläche, verbunden mit einer hohen Auflösung der Positionsbestimmung, einer hohen Sensitivität, abgezielt. Die hohe Auflösung der Positionsbestimmung wird dadurch erreicht, dass der komplette Umfang des Rotors als Targeteinheit dient, wobei die Sensitivität des Sensorkopfes in Umfangs- oder Umlaufrichtung, also in tangentialer Richtung, sinusförmig variiert. Dadurch wird eine Achse, sprich eine Präferenzrichtung des Sensorkopfes ausgebildet.

Die US 2016 238 412 A1 offenbart eine berührungslose elektromagnetische Sensorvorrichtung zur Bestimmung von Verschiebungen eines Rotors. Zwei Abtastspulen wirken mit Oberflächen des Rotors zusammen. Eine Brückenschaltung wird durch die Abtastspulen und durch zwei Sekundärwicklungen eines Eingangstransformators gebildet. Die Primärwicklung des Eingangstransformators empfängt ein Erregersignal. Ein Ausgangssignal wird an einem Ausgangsabgriff erhalten, der durch einen gemeinsamen Knoten zwischen den Abtastspulen und einem gemeinsamen Knoten zwischen den Sekundärwicklungen des Eingangstransformators gebildet wird. Auf diese Weise werden Erregung und Erfassung voneinander getrennt. Werden Kabel zur Verbindung der Brückenschaltung mit der Signalverarbeitungsschaltung verwendet, können die Eingangs- und Ausgangsimpedanzen der Brückenschaltung an die charakteristische Impedanz der Kabel angepasst werden. Ein Ausgangstransformator kann an den Ausgangsabgriff angeschlossen werden. Die Rollen der Eingangs- und Ausgangstransformatoren können vertauscht werden.

Der vorliegenden Erfindung liegt entsprechend die Aufgabe zugrunde, eine Sensoreinrichtung zum berührungslosen Bestimmen einer radialen Position eines Rotors bereitzustellen, welche eine verbesserte Fehlertoleranz aufweist und somit insbesondere eine genauere Regelung eines aktiven Magnetlagers ermöglicht.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Ein Aspekt betrifft eine (auch als elektromagnetische Sensoreinrichtung bezeichnete) Sensoreinrichtung zum berührungslosen Bestimmen einer radialen Position eines Rotors, welcher zur Drehung um eine Längsachse ausgebildet ist.

Bevorzugt ist der Rotor für einen bestimmungsgemäßen Gebrauch mit Umfangsgeschwindigkeiten von mehr als 50 m/s, besonders bevorzugt mehr als 150 m/s, ausgebildet, da dort besonders große Zentripetalkräfte auftreten, was es vorteilhaft macht, die unten beschriebene Targeteinheit wie dort beschrieben mit mehreren Targetelementen zu versehen. Entsprechend sind dort die durch die vorgestellte Sensoreinrichtung erzielten positiven Effekte besonders relevant. Beispielsweise kann der Rotor der Rotor eines Schwungmassenspeichers zum Speichern von Energie sein, insbesondere ein Außenläufer. Der Radius des Rotors ist kann beispielsweise größer als 30 mm sein, insbesondere größer als 100 mm.

Die Sensoreinrichtung weist dabei eine Targeteinheit, einen Spuleneinheit, und eine Steuereinheit auf. Die Targeteinheit ist an dem Rotor angeordnet und weist ein elektrisch leitendes Targetmaterial auf. Die Spuleneinheit weist zumindest eine (also eine oder mehrere), typischerweise mehrere Spulen, beispielsweise vier Spulen, auf. Die Spulen können jeweils mehrere Wicklungen haben. Die Spuleneinheit ist ausgebildet für eine elektromagnetische Wechselwirkung mit dem Targetmaterial der Targeteinheit. Entsprechend ist zumindest ein jeweiliger Großteil der jeweiligen Spule nicht weiter als ein vorgegebener Maximalabstand von der Targeteinheit entfernt angeordnet. Der Maximalabstand ist geeignet gewählt, um die für den bestimmungsgemäßen Gebrauch erforderliche elektromagnetische (insbesondere induktive) Wechselwirkung zwischen Spule und Targetmaterial sicherzustellen. Die Steuereinheit ist elektrisch mit der Spuleneinheit gekoppelt und ausgebildet, die Spuleneinheit mit einem Anregersignal, insbesondere einem sinusförmigen Anregersignal einer vorgegebenen Frequenz, anzuregen und ein Antwortsignal der Spuleneinheit zu erfassen und auszuwerten, um die radiale Position des Rotors zu bestimmen. Das Antwortsignal enthält dabei meist eine sinusförmige Komponente, in welchem etwaige Amplitudenmodulationen gemessen werden. Dies kann bekanntermaßen beispielsweise nach Art einer Wheatstone'schen Messbrücke erfolgen.

Die Targeteinheit weist dabei in Umlaufrichtung auf dem Rotor, also in der tangentialen Richtung des Rotors, mehrere Targetelemente mit dem Targetmaterial auf, welche in der Umlaufrichtung durch einen jeweiligen Spalt voneinander getrennt sind. Die Spalte der Targeteinheit und die zumindest eine Spule der Spuleneinheit sind dabei in ihrer Geometrie, insbesondere der Orientierung der Spalten sowie der Orientierung und der Form der Spule(n) bzw. des Spulenverlaufs, derart aufeinander abgestimmt, dass die zeitliche Änderung des Anteils der Spule, welcher bei rotierendem Rotor in einer Radialprojektion auf die Targeteinheit auf die Spalte der Targeteinheit projiziert wird, im Wesentlichen Null ist während sich die Targeteinheit an der Spuleneinheit vorbeibewegt. Dabei ist der projizierte Anteil der Spule nicht weiter als ein vorgegebener Maximalabstand von den Targetelementen beabstandet, es wird also nur der Anteil der Spule projiziert, welcher nah genug an den Targetelementen angeordnet ist, um bei bestimmungsgemäßem Gebrauch, also während sich die Targeteinheit an der Spuleneinheit vorbeibewegt, mit der Targeteinheit in signifikantem Maße wechselzuwirken. Der Abstand zwischen Spule und Targeteinheit wird dabei in einer radialen Richtung gemessen. Der projizierte Anteil der Spule ist dabei bevorzugt ein Großteil der Spule, also zumindest 75% der Spule, bevorzugt zumindest 85% der Spule, besonders bevorzugt zumindest 95% der Spule. Die Spalten sind dabei bevorzugt geradlinig ausgeführt, besonders bevorzugt axial orientiert, also parallel zur Längsachse des Rotors verlaufend orientiert. Das bringt fertigungstechnische Vorteile und erlaubt dennoch die beschriebene vorteilhafte geometrische Anpassung von Spule und Spalten aufeinander.

Der hier beschriebenen Sensoreinrichtung liegt somit die Erkenntnis zugrunde, dass Spalte in Targeteinheiten mit mehreren durch Spalte voneinander getrennten Targetelementen, also segmentierten Sensortargets, wesentlich zu einer Verschlechterung des Antwortsignals der Spuleneinheit beitragen, und dass diese Verschlechterungen durch eine geometrische Anpassung der Geometrie der genutzten Spulen an die Geometrie der Spalten und/oder der Geometrie der Spalten an die Geometrie der Spulen entscheidend verbessert wird. Es werden also die Geometrie der Spule und damit der Sensorwicklung sowie die Geometrie der Spalte und damit des segmentierten Sensortargets so aufeinander abgestimmt, dass es bei einer Bewegung des segmentierten Sensortargets über den Sensorkopf bzw. die Sensorwicklung hinweg nur zu einer minimalen Störung des Sensor oder Antwortsignals kommt. Als Folge werden bei Nutzung, beispielsweise für ein aktives Magnetlager, nur minimale Störungen in den geschlossenen Regelkreis des Systems, beispielsweise des Magnetlagers, eingebracht. Entsprechend ist die Fehlertoleranz verbessert und die Leistungsfähigkeit im magnetgelagerten System, beispielsweise in einem Schwungmassenspeicher, gesteigert. Gerade Außenläuferrotoren von mit hoher Drehzahl rotierenden Systemen wie magnetgelagerte Außenläufer-Schwungmassenspeichern weisen häufig tangential segmentierte Sensortargets auf: Dort sind die auftretenden Zentripetalkräfte im Allgemeinen so groß, dass der Radius des Rotors drehzahlabhängig ist und somit die Größe einer zusammenhängenden Targetfläche der Targeteinheit begrenzt ist. Da eine größe Targetfläche jedoch für eine genaue und fehlertolerante Positionsbestimmung gewünscht ist, ist ein segmentiertes Sensortarget vonnöten. Durch die resultierenden, typischerweise axial verlaufenden Spalte in der Targetfläche der Targeteinheit treten bei Betrieb die einzelnen Targetsegmente oder Targetelemente nacheinander in den Messbereich der Spuleneinheit ein und verlassen diesen wieder. In der Folge resultieren sich wiederholende, mit einem Vielfachen der Drehzahl auftretende Störungen des Sensorsignals. Der drehzahlabhängige Radius des Rotors führt zu einer drehzahlabhängigen Spaltgeometrie, insbesondere kann sich die Spaltbreite drehzahlabhängig verändern. Beispielsweise kann eine Spaltbreite, welche bei geringen Drehzahlen nur 0 mm beträgt, auf bis zu 3 mm steigen. Entsprechend schwierig ist die Abschätzung und elektronische Kompensation von Störungen in einem vorgegebenen Betriebsmodus, so dass die Verhinderung der Entstehung von Störungen besonders wünschenswert ist.

Dabei treten die besagten Störungen auf, wenn es zu einer Änderung der (in der Radialprojektion auf die Targeteinheit) vom Sensortarget, den Targetelementen, überdeckten Spulenlänge kommt, also wenn ein oder mehrere Abschnitte der Spule sich über dem Spalt zwischen zwei Targetelementen, d.h. in der Radialprojektion im Spalt befinden. Die Störungen werden dabei umso größer, je größer der Anteil der Spule ist, welche nicht vom Targetelement überdeckt wird. Daher wird vorliegend auf eine möglichst geringe Änderung der Länge der Sensorspule, die bei einer Bewegung des Sensortargets nicht vom Sensortarget überdeckt wird, abgezielt. Dies wird durch das beschriebene Merkmal der im Wesentlichen Null betragenden zeitlichen Änderung des Anteils der Spule, der bei rotierendem Rotor in einer Radialprojektion auf die Targeteinheit auf die Spalte der Targeeinheit projiziert wird, erreicht. Dies gilt dabei nur für den Anteil der Spule, welcher nicht weiter als der vorgegebene Maximalabstand von den Targetelementen beabstandet ist. Insbesondere können Werte von weniger als 15 % für den Anteil der in der Radialprojektion auf die Spalte projizierten Anteil der jeweiligen Spule, bevorzugt weniger als 10 %, besonders bevorzugt weniger als 5 % und ganz besonders bevorzugt weniger als 1 %, als im Wesentlichen Null verstanden werden. Beispielsweise kann die zeitliche Änderung des Anteils der Spule, der bei rotierendem Rotor in der Radialprojektion auf die Spalte projiziert wird, ermittelt werden, indem für jeden Zeitpunkt, d.h. für jeden Rotationswinkel des Rotors ermittelt wird, welcher Anteil der Spule auf die Spalte projiziert wird, was für jeden Zeitpunkt einen entsprechenden (prozentualen) Anteilswert liefert. Der Unterschied zwischen den größten und kleinsten Anteilswerten ist dann im Wesentlichen Null, also kleiner als 15%, bevorzugt kleiner als 10%, besonders bevorzugt kleiner als 5% und ganz besonders bevorzugt kleiner als 1%. So kann beispielsweise bei einem oder mehreren ersten Rotationswinkeln der Anteil der Spule, welcher auf die Spalten projiziert wird einen kleinsten Anteilswert von 2% betragen und bei einem oder mehreren zweiten Rotationswinkeln der Anteil der Spule, welcher auf die Spalten projiziert wird einen größten Anteilswert von 10% betragen. In diesem Fall kann die zeitliche Änderung des Anteils der Spule, der bei rotierendem Rotor in einer Radialprojektion auf die Targeteinheit auf die Spalte der Targeeinheit projiziert wird, als im Wesentlichen Null angesehen werden, nämlich vorliegend den beispielhaften Wert von 8% aufweisend.

Die jeweilige Spule kann also, wie auch unten noch weiter beschrieben, insgesamt einen im Wesentlichen gleichbleibenden Abstand von den Targetelementen aufweisen, also gleichmäßig über die gesamte Länge der Spule auf einem vorgegebenen Radius um die Längsachse verlaufen, oder aber nur teilweise auf dem vorgegebenen Radius und beispielsweise in den unten erläuterten Spulen-Umkehrbereichen radial und axial verlaufen, d.h. in einer größeren als dem vorgegebenen Maximalabstand von den Targetelementen angeordnet sein. Dem liegt die Erkenntnis zugrunde, dass nur der Anteil der Spule, welcher den vorgegebenen Maximalabstand von den Targetelementen nicht überschreitet, also nah genug für die elektromagnetische Wechselwirkung ist, signifikante Störungen im Antwortsignal verursachen kann.

Insgesamt wird so eine verbesserte Sensoreinrichtung zum berührungslosen Bestimmen einer radialen Position eines Rotors erreicht, bei welcher durch die beschriebene geeignete Wahl der Geometrie von Spule und Spalten Störungen im Antwortsignal der Spuleneinheit nicht kompensiert werden müssen, da sie bereits in ihrer Entstehung unterbunden werden. Entsprechend wird die Sensoreinrichtung insgesamt fehlertoleranter und kann für eine verbesserte Regelung beispielsweise eines aktiven Magnetlagers genutzt werden.

In einer vorteilhaften Ausführungsform ist dabei vorgesehen, dass die Spule zumindest in einem Spulen-Umkehrbereich, bevorzugt in zwei Spulen-Umkehrbereichen, in welchem eine entlang der Spule vorgegebene Umlaufrichtung der Spule ihre tangentiale Richtung umkehrt, zumindest in einem wesentlichen Abschnitt der Spule im Spulen-Umkehrbereich mit den Spalten einen von Null verschiedenen Axial-Winkel bildet. Der Axial-Winkel kann dabei zumindest 15°, bevorzugt zumindest 35°, besonders bevorzugt zumindest 60° betragen. Der Axial-Winkel wird dabei bevorzugt in der Radialprojektion gemessen, beispielsweise auf einer abgerollten Mantelfläche des Rotors. Durch den von Null verschiedenen Axial-Winkel zwischen Spule und Spalten wird vermieden, dass Spalten und Spule parallel verlaufen, und somit der Anteil der Spule im Umkehrbereich, welche in der Radialposition auf eine Spalte projiziert wird, stark verringert. Der wesentliche Abschnitt der Spule im Spulen-Umkehrbereich umfasst beispielsweise zumindest 75% der Spule im Spulen-Umkehrbereich, bevorzugt zumindest 85%, besonders bevorzugt zumindest 95%. Insbesondere kann der wesentliche Abschnitt auch einen mittleren Abschnitt der Spule, also einen Abschnitt, welcher den Mittelpunkt der Spule im Spulen-Umkehrbereich beinhaltet, umfassen. Der Spulen-Umkehrbereich kann auch als ein Bereich vorgegeben sein, in welchem die Spule quer (nicht parallel) oder im Wesentlichen quer (unter einem geringen Winkel von beispielsweise weniger als 10°, weniger als 5° oder weniger als 3° schneidend) zu einer Ebene verläuft, welche mit der Längsachse des Rotors als Normalenvektor vorgegeben ist (zumindest im Wesentlichen quer zu einer tangential verlaufenden Rotationsrichtung des Rotors)

In einer vorteilhaften Ausführungsform kann dabei vorgesehen sein, dass zumindest ein Spalt und/oder die Spule in dem oder den Umkehrbereichen rund oder elliptisch geformt ist. Alternativ oder ergänzend kann vorgesehen sein, dass zumindest ein Spalt und/oder die Spule des oder der Spulen-Umkehrbereiche jeweils zumindest abschnittsweise, also abschnittsweise oder vollständig, geradlinig geformt ist. Besonders vorteilhaft ist hier eine Kombination eines geradlinigen Spaltes, welcher axial (parallel zur Längsachse) verläuft, mit entweder einer in ihrer Geometrie angepassten Spule, welche im Umkehrbereich rund oder elliptisch geformt ist, oder einer in ihrer Orientierung angepassten Spule, welche im Umkehrbereich zumindest abschnittsweise, insbesondere in dem mittleren Abschnitt, geradlinig geformt ist, jedoch nicht parallel zum Spalt verläuft. Gerade die letztere Ausführungsform ist besonders vorteilhaft, da besonders einfach fertigungstechnisch zu realisieren.

In einer weiteren vorteilhaften Ausführungsform ist vorgesehen, dass ein radialer Abstand der Spule von den Targetelementen in zumindest einem Spulen-Umkehrbereich bei zentriertem Rotor größer ist, als in einem Zentralbereich der Spule zwischen zwei Umkehrbereichen, in welchem die Spule in tangentialer Richtung mit dem vorgegebenen Radius um die Längsachse verläuft. Insbesondere kann der radiale Abstand der Spule im Spulen-Umkehrbereich zumindest doppelt so groß sein wie im Zentralbereich. Bevorzugt ist der radiale Abstand im Zentralbereich nicht größer als der Maximalabstand und im Spulen-Umkehrbereich größer als der Maximalabstand. Das hat wie oben erläutert den Vorteil, dass der für die Störungen ursächliche Spulen-Umkehrbereich die Targetelemente und damit auch die Spalten praktisch nicht "sieht", da die Wechselwirkung zwischen Spule und Targetelement durch den vergrößerten Abstand im Wesentlichen auf Null reduziert ist.

In einer weiteren vorteilhaften Ausführungsform ist vorgesehen, dass eine tangentiale Länge der Spule derart bemessen ist, dass von zwei Spulen-Umkehrbereichen, in welchen die Spule insbesondere parallel zu den Spalten verläuft, unabhängig von einer Rotationsposition des Rotors relativ zur Spule in der Radialprojektion nur die Spule in maximal einem Spulen-Umkehrbereich auf einen Spalt projiziert wird. Bei regelmäßig beabstandeten Spalten ist somit in der Radialprojektion die tangentiale Länge der Spule kein ganzzahliges Vielfaches eines tangentialen Abstands der Spalte. Das hat den Vorteil, dass vermieden wird, dass zeitgleich zwei Spulen-Umkehrbereiche an einem Spalt sich vorbeidrehen, wodurch im Antwortsignal auftretende Störungen aufgrund der Nichtlinearität des Systems um mehr als 50 % reduziert werden, bei um 50 % verringerter zeitlicher Änderung des Anteils der Spule, der bei rotierendem Rotor in der Radialprojektion auf die Spalte der Targeteinheit projiziert wird.

In einer anderen vorteilhaften Ausführungsform ist vorgesehen, dass das Verhältnis von tangentialer Länge der Spule zu einer axialen Breite der Spule einen Wert von 5:1 nicht unterschreitet. Die axiale Breite kann dabei zumindest 1 mm und/oder maximal 10 mm betragen. Bevorzugt beträgt die axiale Breite der Spule zumindest das Doppelte des Targetabstandes, d.h. das Doppelte der Breite des radialen Abstands zwischen Spule und Targetelement bei der vorgesehenen Zentralposition des Rotors relativ zur Spuleneinheit. Damit wird ebenfalls sichergestellt, dass der Spulen-Umkehrbereich klein bleiben kann und so die Größe der Störungen reduziert bleibt.

Ein weiterer Aspekt betrifft ein aktives Magnetlager mit einer Sensoreinrichtung nach einer der beschriebenen Ausführungsformen sowie eine mit der Sensoreinrichtung gekoppelten Regeleinheit, welches das Magnetlager in Abhängigkeit eines von der Sensoreinrichtung empfangenen Sensorsignals regelt. Noch ein Aspekt betrifft einen Schwungmassenspeicher zum Speichern von Energie, mit einer Sensoreinrichtung nach einer der beschriebenen Ausführungsformen, wobei eine Schwungmasse des Schwungmassenspeichers den als Außenläufer gestalteten Rotor der Sensoreinrichtung bildet.

Die vorstehend in der Beschreibung, auch im einleitenden Teil, genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Anhand der in den nachfolgenden Figuren gezeigten schematischen Zeichnungen soll der erfindungsgemäße Gegenstand näher erläutert werden, ohne diesen auf die hier gezeigten spezifischen Ausführungsformen einschränken zu wollen. Dabei zeigen:
Fig. 1 eine schematische Ansicht einer beispielhaften Sensoreinrichtung zum berührungslosen Bestimmen einer radialen Position eines Rotors;
Fig. 2 eine beispielhaft angepasste Geometrie von Spalt und Spule in einer Radialprojektion;
Fig. 3 eine zweite und eine dritte beispielhafte Geometrie von Spalt und Spule in der Radialprojektion;
Fig. 4 eine vierte beispielhafte Geometrie von Spalte und Spule in der Radialprojektion;
Fig. 5 eine fünfte beispielhafte Geometrie von Spalt und Spule in einer Radialprojektion;
Fig. 6 eine aus dem Stand der Technik bekannte Geometrie von Spalten und Spule in einer Radialprojektion;
und Fig. 7 ein letztes Beispiel einer Geometrie von Spalten und Spule in der Radialprojektion von Fig. 6.

In den unterschiedlichen Figuren sind gleiche oder funktionsgleiche Elemente mit den gleichen Bezugszeichen versehen.

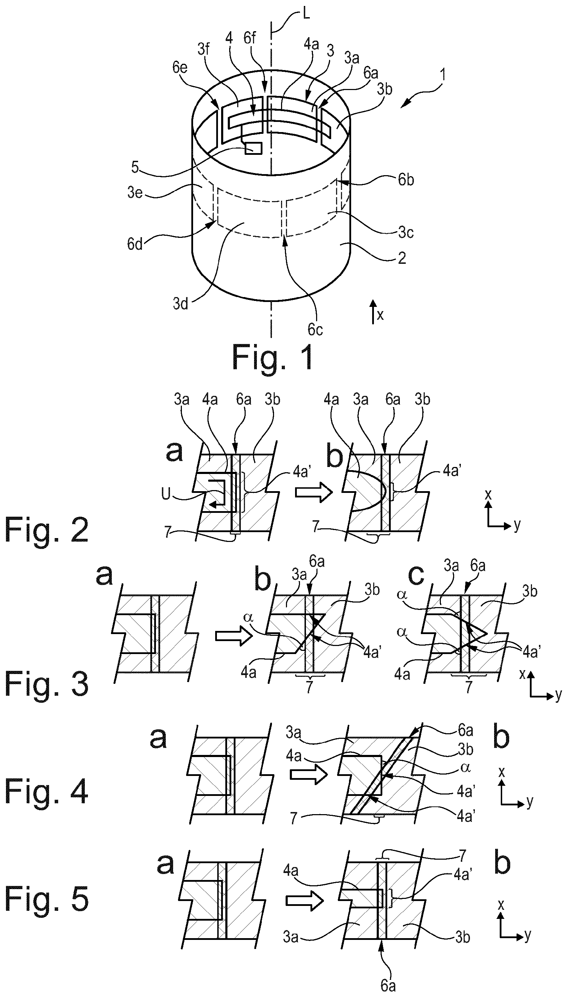

Fig. 1 zeigt eine schematische Darstellung einer Sensoreinrichtung 1 zum berührungslosen Bestimmen einer radialen Position eines Rotors 2, welcher zur Drehung um eine Längsachse L ausgebildet ist, mit einer Targeteinheit 3, einer Spuleneinheit 4 und einer Steuereinheit 5.

Die Targeteinheit 3 ist an dem Rotor 2, welcher vorliegend ein Außenläufer ist, angeordnet und weist ein elektrisch leitendes Targetmaterial auf. Die Spuleneinheit weist zumindest eine Spule 4a, hier genau eine Spule 4a, auf, und ist für eine elektromagnetische Wechselwirkung mit dem Targetmaterial der Targeteinheit 3 ausgebildet. Die Steuereinheit 5 ist elektrisch mit der Spule 4a in Spuleneinheit 4 gekoppelt und ausgebildet, die Spuleneinheit 4 mit einem Anregersignal anzuregen und ein Antwortsignal der Spuleneinheit 4 zu erfassen und auszuwerten, um die radiale Position des Rotors 2 relativ zur Spuleneinheit 4 und damit beispielsweise relativ zu Stator oder Lagerschale zu bestimmen. Die Targeteinheit 3 weist dabei in Umlaufrichtung auf dem Rotor 2, also tanegntial, mehrere Targetelemente 3a bis 3f mit dem Targetmaterial auf, welche durch jeweilige Spalte 6a bis 6f voneinander getrennt sind. Dabei sind die Spalte 6a bis 6f der Targeteinheit 3 und die zumindest eine Spule 4a der Spuleneinheit 4 in ihrer Geometrie derart aufeinander abgestimmt, dass die zeitliche Änderung des Anteils der zumindest einen Spule 4a, der bei rotierendem Rotor 2 in einer Radialprojektion auf die Targeteinheit 3 auf die Spalte 6a bis 6f der Targeteinheit 3 projiziert wird, im Wesentlichen Null ist, wobei der projizierte Anteil der Spule 4a nicht weiter als eine vorgegebene Entfernung, ein Maximalabstand, von den Targetelementen beabstandet ist.

In Fig. 2, Teilbild a, ist ein Ausschnitt aus einer Radialprojektion auf die Targeteinheit 3 mit einer aus dem Stand der Technik bekannten Geometrie von Spalt 6a und Spule 4a gezeigt. Auch die weiteren Figuren zeigen analog solche Radialprojektionen, ohne dass dies gesondert erläutert wird. In dem Spulen-Umkehrbereich 7, in welchen eine entlang der Spule 4a vorgegebene Umlaufrichtung U ihre tangentiale Richtung umkehrt, also vorliegend von positiver y-Richtung in negative y-Richtung umkehrt, verläuft hier der Anteil 4a' der Spule, der in der gezeigten Radialprojektion auf den Spalt 6a projiziert wird, parallel zu diesem Spalt 6a und nimmt entsprechend einen großen Anteil an der gesamten Spule 4a ein. Da der Spalt sich bei bestimmungsgemäßem Gebrauch relativ zur Spule 4a in y-Richtung bewegt, ist die zeitliche Änderung des Anteils 4a' der Spule, der bei rotierendem Rotor in der Radialprojektion auf die Targeteinheit auf die Spalte 6a der Targeteinheit 3 projiziert wird, von großen Schwankungen geprägt.

In Teilbild 2b ist entsprechend eine beispielhafte verbesserte Geometrie gezeigt, gemäß welcher bei unveränderter Spalt-Geometrie die Spule 4 im Spulen-Umkehrbereich 7 elliptisch geformt ist. Entsprechend ist der Anteil 4a' an der Gesamtspulenlänge 4a zu dem gezeigten und auch den anderen Zeitpunkten wesentlich geringer, und die Größe der aus dem Anteil 4a' resultierenden Störungen in Betrieb, also bei rotierender Targeteinheit 3 im Wesentlichen auf Null reduziert.

Fig. 3 zeigt in Teilbild a zunächst die aus Fig. 2a bekannte Geometrie. In den Teilbildern 3b und 3c sind sodann zwei beispielhafte Geometrien für die Spule 4 gezeigt, bei welchen der Spalt 6a wie auch aus dem Stand der Technik bekannt axial orientiert geradlinig verläuft und auch die Spule 4a in dem Umkehrbereich 7 jeweils abschnittsweise, vorliegend in Teilbild 3b vollständig und in Teilbild 3c in zwei Abschnitten geradlinig verläuft, und damit bis auf die Spitze der beiden aufeinander zulaufenden geradlinigen Abschnitte geradlinig ist. Dabei ist zwischen dem ersten der beiden geradlinigen Abschnitte 4a' in dem Spulen-Umkehrbereich 7 zwischen Spalt 6a und Spule 4a in der Projektion ein Axialwinkel α gebildet, bzw. zwischen dem zweiten der beiden geradlinigen Abschnitte 4a' in dem Spulen-Umkehrbereich 7 zwischen Spalt 6a und Spule 4a in der Projektion ein Axialwinkel α'. Die Winkel α, α' können, müssen aber nicht gleich sein.

Auch so wird der Anteil 4a' der Spule, der zum gezeigten Zeitpunkt auf die Spalte 6a der Targeteinheit 3 projiziert wird, klein gehalten und somit die zeitliche Änderung des Anteils der Spule 4, der bei rotierendem Rotor 2 in einer Radialprojektion auf die Spalte 6a der Targeteinheit 3 projiziert wird, auf im Wesentlichen Null minimiert.

In Fig. 4 ist nun in Teilbild a erneut die Geometrie von Fig. 2a dargestellt. In Teilbild 4b ist nun der konventionelle, beispielsweise rechteckige Verlauf der Spule 4a mit einem im Umkehrbereich 7 vollständig axial verlaufenden Abschnitt 4a' gezeigt. Diese Spule 4a ist mit einem geradlinigen Spalt 6a kombiniert, dessen Orientierung jedoch an die konventionelle Geometrie der Spule 4a angepasst wurde, indem die axiale Neigung verändert wurde, also der Spalt gegenüber dem Abschnitt 4a' verkippt (nicht-parallel) verläuft. Analog zu dem in den Figuren 3b und 3c gezeigten Geometrien ist somit auch hier der Störungen verursachende Anteil 4a' auf im Wesentlichen Null reduziert.

Fig. 5 zeigt nun erneut in Teilbild 5a die aus Fig. 2a bekannte Geometrie des Stands der Technik. In Teilbild 5b beträgt das Verhältnis der tangentialen Länge der Spule 4a, also der Länge der Spule 4a in y-Richtung, zu einer axialen Breite der Spule, also der Breite der Spule in x-Richtung, einen Wert von weniger als 5:1, sodass der Anteil 4a' im Umkehrbereich 7 bei vergleichbarem Verhalten reduziert ist, insbesondere bei vergleichbarer Amplitude des Antwortsignals der Spule 4 relativ zu einer Stärke des Anregersignals. Auch hier somit werden entsprechend Störungen reduziert indem der Störungen verursachende Anteil 4a' auf im Wesentlichen Null reduziert wird.

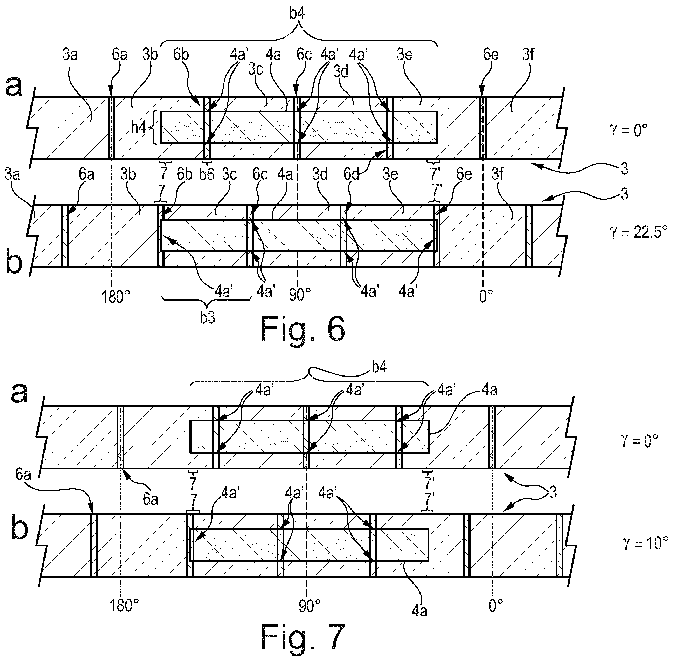

In Fig. 6 ist die Projektion der Spule 4a auf die Targeteinheit 3 in den Teilbildern 6a und 6b für zwei unterschiedliche Rotationswinkel γ der Targeteinheit 3 relativ zur Spule 4a und damit der Spuleneinheit 4 gestellt. Die Geometrie der Spule 4a und der Spalte 6a bis 6e sind dabei wie aus dem Stand der Technik bekannt vorgegeben, hier geradlinig in axialer Richtung verlaufend. Dabei ist der Rotationswinkel γ für das Teilbild 6a in einem entsprechend gewählten standortfesten Bezugssystem willkürlich auf 0° gesetzt, wohingegen in dem Teilbild 6b eine Rotation von Targeteinheit 3 gegenüber Spuleneinheit 4 um 22,5° stattgefunden hat.

In Teilbild 6a ist in keinem der beiden Umkehrbereiche 7, 7' die Spule 4 auf einen der Spalte 6a bis 6e projiziert. Entsprechend ist der Anteil 4a' der Spule 4a, welcher in der Projektion auf einen der Spalte 6a bis 6e projiziert wird, verschwindend gering.

Anders ist die Situation im gezeigten Beispiel in Teilbild 6b, in welchem die Targeteinheit 3 weiter gedreht ist. Da die tangentiale Länge b4 der Spule 4a (in der Radialprojektion) vorliegend ein Vielfaches des tangentialen Abstands der Spalten 6a bis 6e ist, welcher aufgrund der Dynamik des Systems als Summe der tangentiale Breite b3 der Targetelemente 3a bis 3f und der tangentialen Breite b6 der Spalten 6a bis 6e gegeben ist, wird die Spule 4a in beiden Umkehrbereichen 7, 7' bei dem gezeigten Rotationswinkel γ von 22,5° zeitgleich auf einen Spalt 6b, 6e projiziert. Dadurch variiert die zeitliche Änderung des Anteils 4a' der Spule4 , der bei rotierendem Rotor 2 in einer Radialprojektion auf die Targeteinheit 3 auf die Spalte 6a bis 6e der Targeteinheit 3 projiziert wird stark, was zu großen Störungen führt.

In Fig. 7 ist nun analog zu Fig. 6 die Projektion der Spule 4a auf die Targeteinheit 3 für zwei unterschiedliche Rotationswinkel γ dargestellt. In Teilbild 7a ist dabei die Situation ähnlich dem Teilbild 6a und der Anteil 4a' der Spule 4a, welche in der Radialprojektion auf die Spalten 6a projiziert wird, ist gegenüber dem Stand der Technik unverändert. Da jedoch die tangentiale Länge b4 der Spule 4a kein Vielfaches des tangentialen Abstands (=tangentiale Breite b3 + tangentiale Breite b6) der Spalte 6a bis 6e ist, ist bei einem Weiterdrehen des Rotors 2 die Spule 4a stets nur in höchstens einem Umkehrbereich 7 in der Projektion auf einem der Spalte 6a bis 6e gelegen. Das Antwortsignal der Spule bzw. Anregungsverhalten der Spule kann dabei beispielsweise durch ein Anpassen, hier Vergößern der axialen Höhe h4 der Spule 4a beibehalten werden. Alternativ zum gezeigten Verringern der tangentialen Breite b4 der Spule 4a kann analog auch ein Vergrößern der tangentialen Breite verhindern, dass die Spule 4a in der Radialprojektion in zwei Umkehrbereichen 7, 7' gleichzeitig auf Spalte 6a bis 6e projiziert wird.In beiden Fällten ist die zeitliche Änderung des Anteils 4a' der Spule, der bei rotierendem Rotor 2 in der Radialprojektion auf die Targeteinheit 3 auf die Spalte 6a bis 6e der Targeteinheit projiziert wird, minimiert, d.h. im Wesentlichen Null.

## Patentansprüche

1. Sensoreinrichtung (1) zum berührungslosen Bestimmen einer radialen Position eines Rotors (2), welcher zur Drehung um eine Längsachse (L) ausgebildet ist, mit
- einer Targeteinheit (3), die an dem Rotor (2) angeordnet ist und ein elektrisch leitendes Targetmaterial aufweist;
- einer Spuleneinheit (4), welche zumindest eine Spule (4a) aufweist und ausgebildet ist für eine elektromagnetische Wechselwirkung mit dem Targetmaterial der Targeteinheit (3);
- einer Steuereinheit (5), welche elektrisch mit der Spuleneinheit (4) gekoppelt ist und ausgebildet ist, die Spule (4a) der Spuleneinheit (4) mit einem Anregersignal anzuregen und ein Antwortsignal der Spuleneinheit (4) zu erfassen und auszuwerten, um die radiale Position des Rotors (2) zu bestimmen;
**dadurch gekennzeichnet, dass**
- die Targeteinheit (3) in Umlaufrichtung auf dem Rotor (2) mehrere Targetelemente (3a-3f) mit dem Targetmaterial aufweist, welche durch einen jeweiligen Spalt (6a-6f) voneinander getrennt sind; und
- die Spalte (6a-6f) der Targeteinheit (3) und die zumindest eine Spule (4a) der Spuleneinheit (4) in ihrer Geometrie derart aufeinander abgestimmt sind, dass die zeitliche Änderung des Anteils (4a') der Spule (4a), der bei rotierendem Rotor (2) in einer Radialprojektion auf die Targeteinheit (3) auf die Spalte (6a-6f) der Targeteinheit (3) projiziert wird, weniger als 15% ist.

2. Sensoreinrichtung (1) nach dem vorhergehenden Anspruch,
**dadurch gekennzeichnet, dass**
der projizierte Anteil (4a') der Spule (4a) nicht weiter als ein vorgegebener Maximalabstand von den Targetelementen (3a-3f) beabstandet ist, sodass nur der Anteil der Spule (4a) projiziert wird, welcher nah genug an den Targetelementen (3a-3f) angeordnet ist, um während sich die Targeteinheit (3) bei bestimmungsgemäßem Gebrauch an der Spuleneinheit (4) vorbeibewegt mit der Targeteinheit (3) in signifikantem Maße wechselzuwirken.

3. Sensoreinrichtung (1) nach einem der vorhergehenden Ansprüche,
**dadurch gekennzeichnet, dass**
die Spule (4a) in zumindest einem Spulen-Umkehrbereich (7, 7'), in welchem eine entlang der Spule (4a) vorgegebene Umlaufrichtung (U) ihre tangentiale Richtung umkehrt, zumindest abschnittsweise mit den Spalten einen von Null verschiedenen Winkel (α, α') bildet, sodass ein paralleles Verlaufen von Spule (4a) und Spalten (6a-6f) vermieden wird.

4. Sensoreinrichtung (1) nach dem vorhergehenden Anspruch,
**dadurch gekennzeichnet, dass**
zumindest ein Spalt (6a-6f) und/oder die Spule (4a) zumindest eines Spulen-Umkehrbereichs (7, 7') rund oder elliptisch geformt ist.

5. Sensoreinrichtung (1) nach einem der beiden vorhergehenden Ansprüche,
**dadurch gekennzeichnet, dass**
zumindest ein Spalt (6a-6f) und/oder die Spule (4a) zumindest eines Spulen-Umkehrbereichs (7, 7') jeweils zumindest abschnittsweise geradlinig geformt ist.

6. Sensoreinrichtung (1) nach einem der drei vorhergehenden Ansprüche,
**dadurch gekennzeichnet, dass**
der Winkel (α, α') zumindest 15°, bevorzugt zumindest 35°, besonders bevorzugt zumindest 60° beträgt.

7. Sensoreinrichtung (1) nach einem der vorhergehenden Ansprüche,
**dadurch gekennzeichnet, dass**
ein radialer Abstand der Spule (4a) von den Targetelementen (3a-3f) in zumindest einem Spulen-Umkehrbereich (7, 7') bei zentriertem Rotor (2) größer ist, als in einem Zentralbereich der Spule (4a) zwischen zwei Umkehrbereichen (7, 7'), in welchem die Spule (4a) tangential verläuft, insbesondere der radiale Abstand der Spule (4a) im Spulen-Umkehrbereich (7, 7') zumindest doppelt so groß ist wie im Zentralbereich.

8. Sensoreinrichtung (1) nach einem der vorhergehenden Ansprüche,
**dadurch gekennzeichnet, dass**
eine tangentiale Länge der Spule (4a) derart bemessen ist, dass von zwei Spulen-Umkehrbereichen (7, 7'), in welchen die Spule (4a) insbesondere parallel zu den Spalten (6a-6f) verläuft, unabhängig von einer Rotationsposition des Rotors (2) relativ zur Spule (4a) in der Radialprojektion nur die Spule (4a) in maximal einem Spulen-Umkehrbereich (7, 7') auf einen Spalt (6a-6f) projiziert wird.

9. Sensoreinrichtung (1) nach einem der vorhergehenden Ansprüche,
**dadurch gekennzeichnet, dass**
das Verhältnis von tangentialer Länge der Spule (4a) zu einer axialen Breite der Spule (4a) einen Wert von 5:1 nicht unterschreitet.

10. Sensoreinrichtung (1) nach einem der vorhergehenden Ansprüche,
**dadurch gekennzeichnet, dass**
die zeitliche Änderung des Anteils (4a') der Spule (4a), der bei rotierendem Rotor (2) in der Radialprojektion auf die Targeteinheit (3) auf die Spalte (6a-6f) der Targeteinheit (3) projiziert wird, weniger als 10% ist, bevorzugt weniger als 1%, wobei die zeitliche Änderung durch den Unterschied zwischen einem kleinsten Anteilswert bei einem oder mehreren ersten Rotationswinkeln und einem größten Anteilswert bei einem oder mehreren zweiten Rotationswinkeln bestimmt ist.

11. Schwungmassenspeicher zum Speichern von Energie, mit einer Sensoreinrichtung (1) nach einem der vorhergehenden Ansprüche, wobei eine Schwungmasse des Schwungmassenspeichers den als Außenläufer gestalteten Rotor (2) der Sensoreinrichtung (1) bildet.

## Claims

1. A sensor device (1) for contactless determination of a radial position of a rotor (2) which is adapted to rotate about a longitudinal axis (L), comprising
- a target unit (3) which is arranged on the rotor (2) and comprises an electrically conductive target material;
- a coil unit (4) which comprises at least one coil (4a) and is adapted for electromagnetic interaction with the target material of the target unit (3)
- a control unit (5) which is electrically coupled to the coil unit (4) and is designed to excite the coil (4a) of the coil unit (4) with an excitation signal and to detect and evaluate a response signal of the coil unit (4) in order to determine the radial position of the rotor (2);
**characterized in that**
- the target unit (3) has, in the direction of rotation on the rotor (2), a plurality of target elements (3a-3f) with the target material, which are separated from one another by a respective gap (6a-6f); and
- the gaps (6a-6f) of the target unit (3) and the at least one coil (4a) of the coil unit (4) are matched to each other in their geometry in such a way that the temporal change of the portion (4a') of the coil (4a), which is projected, in a radial projection onto the target unit (3), onto the gaps (6a-6f) of the target unit (3) when the rotor (2) is rotating is less than 15%.

2. Sensor device (1) according to the preceding claim,
**characterized in that**
the projected portion (4a') of the coil (4a) is spaced no further than a predetermined maximum distance from the target elements (3a-3f), such that only that portion of the coil is projected which portion is close enough to the target elements to interact with the target unit to any significant degree during intended use while the target unit moves past the coil unit.

3. Sensor device (1) according to one of the preceding claims,
**characterized in that**
the coil (4a) forms a non-zero angle (α, α') with the gaps at least in sections in at least one coil reversal region (7, 7'), in which a circulation direction (U) predetermined along the coil (4a) reverses its tangential direction such that the coil (4a) and the the gaps (6a-6f) are prevented from being parallel.

4. Sensor device (1) according to the preceding claim,
**characterized in that**
at least one gap (6a-6f) and/or the coil (4a) of at least one coil reversal region (7, 7') is round or elliptically shaped.

5. Sensor device (1) according to one of the two preceding claims,
**characterized in that**
at least one gap (6a-6f) and/or the coil (4a) of at least one coil reversal region (7, 7') is in each case shaped rectilinearly at least in sections.

6. Sensor device (1) according to any of the three preceding claims,
**characterized in that**
the axial angle (α, α') is at least 15°, preferably at least 35°, particularly preferably at least 60°.

7. Sensor device (1) according to one of the preceding claims,
**characterized in that**
a radial distance of the coil (4a) from the target elements (3a-3f) is, with the rotor (2) centered, greater in at least one coil reversal region (7, 7') than in a central region of the coil (4a) between two reversal regions (7, 7'), in which the coil (4a) runs tangentially, in particular the radial distance of the coil (4a) in the coil reversal region (7, 7') is at least twice as great as in the central region.

8. Sensor device (1) according to one of the preceding claims,
**characterized in that**
a tangential length of the coil (4a) is dimensioned in such a way that of two coil-reversal regions (7, 7'), in which the coil (4a) runs in particular parallel to the gaps (6a-6f), irrespective of a rotational position of the rotor (2) relative to the coil (4a) in the radial projection the coil (4a) is projected onto a gap (6a-6f) only in at most one coil reversal region (7, 7').

9. Sensor device (1) according to one of the preceding claims,
**characterized in that**
the ratio of tangential length of the coil (4a) to an axial width of the coil (4a) does not fall below a value of 5:1.

10. Sensor device (1) according to one of the preceding claims,
**characterized in that**
the temporal change of the portion (4a') of the coil (4a) projected onto the gaps (6a-6f) of the target unit (3) when the rotor (2) is rotating in the radial projection onto the target unit (3) is less than 10%, preferably less than 1%, wherein the temporal change is determined by the difference between a smallest portion value at one or more first rotation angles and a largest portion value at one or more second rotation angles.

11. Flywheel mass accumulator for storing energy, having a sensor device (1) according to one of the preceding claims, wherein a flywheel mass of the flywheel mass accumulator forms the rotor (2), designed as an outer rotor, of the sensor device (1).

## Revendications

1. Dispositif capteur (1) pour la détermination sans contact de la position radiale d'un rotor (2) qui est adapté pour tourner autour d'un axe longitudinal (L), comprenant
- une unité cible (3) qui est disposée sur le rotor (2) et comprend un matériau cible électriquement conducteur ;
- une unité de bobine (4) qui comprend au moins une bobine (4a) et est adaptée pour une interaction électromagnétique avec le matériau cible de l'unité cible (3)
- une unité de commande (5) qui est couplée électriquement à l'unité de bobine (4) et qui est conçue pour exciter la bobine (4a) de l'unité de bobine (4) avec un signal d'excitation et pour détecter et évaluer un signal de réponse de l'unité de bobine (4) afin de déterminer la position radiale du rotor (2) ;
**caractérisé en ce que**
- l'unité cible (3) comporte, dans le sens de rotation du rotor (2), une pluralité d'éléments cibles (3a-3f) avec le matériau cible, qui sont séparés les uns des autres par un espace respectif (6a-6f); et
- les espaces (6a-6f) de l'unité cible (3) et la au moins une bobine (4a) de l'unité à bobine (4) sont adaptés les uns aux autres dans leur géométrie de telle sorte que la variation temporelle de la partie (4a') de la bobine (4a), qui est projetée, dans une projection radiale sur l'unité cible (3), sur les espaces (6a-6f) de l'unité cible (3) lorsque le rotor (2) tourne est inférieur à 15 %.

2. Dispositif capteur (1) selon la revendication précédente,
**caractérisé en ce que**
la partie projetée (4a') de la bobine (4a) n'est pas espacée de plus d'une distance maximale prédéterminée des éléments cibles (3a-3f), de telle sorte que seule la partie de la bobine qui est suffisamment proche des éléments cibles pour interagir avec l'unité cible de manière significative pendant l'utilisation prévue lorsque l'unité cible passe devant l'unité de bobine est projetée.

3. Dispositif capteur (1) selon l'une des revendications précédentes,
**caractérisé en ce que**
la bobine (4a) forme un angle non-nul (α, α') avec les espaces au moins dans des sections d'au moins une région d'inversion de bobine (7, 7'), dans laquelle une direction de circulation (U) prédéterminée le long de la bobine (4a) inverse sa direction tangentielle de telle sorte que la bobine (4a) et les espaces (6a-6f) ne puissent pas être parallèles.

4. Dispositif capteur (1) selon la revendication précédente,
**caractérisé en ce que**
au moins un espace (6a-6f) et/ou la bobine (4a) d'au moins une zone d'inversion de bobine (7, 7') est de forme ronde ou elliptique.

5. Dispositif capteur (1) selon l'une des deux revendications précédentes,
**caractérisé en ce que**
au moins un espace (6a-6f) et/ou la bobine (4a) d'au moins une zone d'inversion de bobine (7, 7') est respectivement de forme rectiligne au moins par sections.

6. Dispositif capteur (1) selon l'une quelconque des trois revendications précédentes,
**caractérisé en ce que**
l'angle axial (α, α') est d'au moins 15°, de préférence d'au moins 35°, de préférence encore d'au moins 60°.

7. Dispositif capteur (1) selon l'une des revendications précédentes,
**caractérisé en ce que**
la distance radiale entre la bobine (4a) et les éléments cibles (3a-3f) est, lorsque le rotor (2) est centré, plus grande dans au moins une zone d'inversion de bobine (7, 7') qu'à une zone centrale de la bobine (4a) entre deux zones d'inversion (7, 7'), dans laquelle la bobine (4a) s'étend tangentiellement, en particulier la distance radiale de la bobine (4a) dans la zone d'inversion de bobine (7, 7') est au moins deux fois plus grande que dans la zone centrale.

8. Dispositif capteur (1) selon l'une des revendications précédentes,
**caractérisé en ce que**
une longueur tangentielle de la bobine (4a) est dimensionnée de telle sorte que, parmi deux zones d'inversion de bobine (7, 7') dans lesquelles la bobine (4a) s'étend en particulier parallèlement aux espaces (6a-6f), indépendamment d'une position de rotation du rotor (2) par rapport à la bobine (4a), dans la projection radiale, la bobine (4a) n'est projetée sur un espace (6a-6f) que dans au plus une zone d'inversion de bobine (7, 7').

9. Dispositif capteur (1) selon l'une des revendications précédentes,
**caractérisé en ce que**
le rapport entre la longueur tangentielle de la bobine (4a) et la largeur axiale de la bobine (4a) n'est pas inférieur à une valeur de 5:1.

10. Dispositif capteur (1) selon l'une des revendications précédentes,
**caractérisé en ce que**
la variation temporelle de la partie (4a') de la bobine (4a) projetée sur les espaces (6a-6f) de l'unité cible (3) lorsque le rotor (2) tourne dans la projection radiale sur l'unité cible (3) est inférieur à 10 %, de préférence inférieur à 1 %, la variation temporelle étant déterminée par la différence entre une valeur de partie la plus petite à un ou plusieurs premiers angles de rotation et une valeur de partie la plus grande à un ou plusieurs seconds angles de rotation.

11. Accumulateur d'énergie à volant d'inertie pour stocker de l'énergie, comportant un dispositif capteur (1) selon l'une des revendications précédentes, dans lequel une masse d'inertie du volant d'inertie de l'accumulateur d'énergie à volant d'inertie forme le rotor (2), conçu comme un rotor extérieur, du dispositif capteur (1).
